# EUROPÄISCHE PATENTSCHRIFT

(11) **EP 2 296 842 B1**
(45) Veröffentlichungstag und Bekanntmachung des Hinweises auf die Patenterteilung: **18.01.2017**
(21) Anmeldenummer: 09753552.0
(22) Anmeldetag: 28.05.2009
(51) Int. Cl.: B23K 26/40

(54) **VERFAHREN ZUR TRENNENDEN BEARBEITUNG VON WERKSTÜCKEN MIT EINEM LASERSTRAHL**
METHOD FOR CUTTING A WORKPIECE WITH A LASER BEAM
MÉTHODE DE DÉCOUPE D'UNE PIÈCE AU LASER

(30) Priorität: 29.05.2008 DE 102008027130
(43) Veröffentlichungstag der Anmeldung: 23.03.2011
(73) Patentinhaber: Fraunhofer-Gesellschaft zur Förderung der angewandten Forschung e.V., 80686 München (DE)
(72) Erfinder: LÜTKE, Matthias, 01309 Dresden (DE); MORGENTHAL, Lothar, 01187 Dresden (DE); HIMMER, Thomas, 01099 Dresden (DE); BEYER, Eckhard, 01307 Dresden (DE)
(74) Vertreter: Pfenning, Meinig & Partner mbB
(86) Internationale Anmeldenummer: PCT/DE2009/000773
(87) Internationale Veröffentlichungsnummer: WO 2009/143836

(56) Entgegenhaltungen:
- US-B1- 6 388 231
- US-B1- 6 696 667

## Beschreibung

Die Erfindung betrifft ein Verfahren zur trennenden Bearbeitung von Werkstücken mit einem Laserstrahl. Das Verfahren kann bei aus einem homogenen Werkstoff gebildetem Werkstück aber auch bei als Verbundbauteil mit mehreren Werkstoffen gebildeten Werkstücken eingesetzt werden. Bei solchen Verbundbauteilen kann besonders bevorzugt, das so genannte "Kiss-Cutting" durchgeführt werden.

Bei vielen Anwendungsfällen sind neben hoher Arbeitsproduktivität auch hohe Anforderungen an die Qualität gestellt. Dies betrifft bei den in Rede stehenden Laserschneidverfahren insbesondere die ausgebildeten Schneidkanten. Es ist auch eine schmale Schnittfuge gewünscht. Unter diesen Aspekten sind die Verfahren mit einer Schneidgaszuführung nachteilig, bei denen ein Schmelzen von Werkstoff mit der Energie der Laserstrahlung erreicht und die Schmelze dann mit unter erhöhten Druck in die Schnittfuge zugeführtem Schneidgas ausgetrieben wird, obwohl sie hochproduktiv mit kleinen Bearbeitungszeiten durchgeführt werden können. Bei flexiblen Werkstücken, wie beispielsweise Folien kann durch den Schneidgaseinfluss bei der Bearbeitung eine Verformung auftreten. Diese kann mit dem entgegenwirkenden Handhabungssystemen kompensiert werden, wobei aber die Bearbeitungsgeschwindigkeit reduziert wird und insbesondere komplexe geometrische Konturen nicht oder nur sehr langsam ausgebildet werden können.

Daneben sind auch Verfahren bekannt, bei denen ein Werkstoffabtrag durch Ablation erfolgt und dabei Werkstoff durch Sublimation vom zu bearbeitenden Werkstück entfernt wird. Diese bekannten auf Ablation basierenden Techniken erreichen aber geringe Abtragsraten und können mit kleinen Vorschubgeschwindigkeiten arbeiten.

Beim bereits angesprochenen "Kiss-Cutting" sollen einzelne Ausschnitte eines Werkstoffs, der an einem Trägerwerkstoff/-material befestigt ist, ausgebildet werden, die nach der trennenden Bearbeitung vom Träger entfernt werden können. Als Träger werden dabei häufig auf Zellulose basierende, wie z.B. Papier oder auch Polymere eingesetzt. Die unterschiedlichen Werkstoffe bzw. Materialien können dabei stoffschlüssig, bevorzugt mit geeigneten Haftvermittlern verbunden sein, so dass die Verbindung auch wieder lösbar ist. Hier werden bisher häufig Stanzverfahren eingesetzt. Dabei sind aber die Werkzeugkosten, die Einhaltung von Mindestabmaßen/-stegbreiten, auftretender Werkzeugverschleiß und Schwierigkeiten bei der Bearbeitung dünner folienförmiger Werkstücke nachteilig.

So sind in US 6,388,231 B1 ein System und ein Verfahren beschrieben, mit denen eine bestimmte Tiefe beim Laserstrahlschneiden eingehalten werden kann. Neben anderen Parametern werden darin bestimmte maximale Vorschubgeschwindigkeiten genannt.

Aus US 6,696,667 B1 wird u.a. erwähnt, dass beim Laserstrahlschneiden eine Energiedichte von mindestens 10⁷ W/cm² eingehalten werden soll.

Es ist daher Aufgabe der Erfindung die Bearbeitungsgeschwindigkeit, die Flexibilität und die Qualität bei der trennenden Bearbeitung von Werkstücken mit einem Laserstrahl, bei dem ein Werkstoffabtrag ausschließlich durch Ablation erreicht werden soll, zu verbessern.

Erfindungsgemäß wird diese Aufgabe mit einem Verfahren, das die Merkmale des Anspruchs 1 aufweist, gelöst. Vorteilhafte Weiterbildungen und Ausführungen der Erfindung sind mit in untergeordneten Ansprüchen bezeichneten Merkmalen erreichbar.

Beim erfindungsgemäßen Verfahren soll ein fokussierter Laserstrahl auf eine zu bearbeitende Oberfläche eines Werkstücks gerichtet werden, mit dem der Werkstoffabtrag ausschließlich durch Ablation erreicht werden soll. Für die Ausbildung gewünschter Schneidkonturen erfolgt mit an sich bekannten technischen Mitteln eine Relativbewegung von Laserstrahl und Werkstück. Bevorzugt wird dabei auch der Laserstrahl ausgelenkt, um die Vorschubgeschwindigkeit zu erhöhen und flexibler auf gewünschte geometrische Konturen eingehen zu können.

Als wichtige Parameter sind bei der Bearbeitung eine Mindestleistungsdichte im Brennpunkt des Laserstrahls von 1 * 10⁷ W/cm², bevorzugt mindestens 1 * 10⁸ W/cm² und eine Mindestvorschubgeschwindigkeit von 150 m/min, bevorzugt 200 m/min, ganz besonders bevorzugt von mindestens 700 m/min einzuhalten. Sie soll aber kleiner als 1200 m/min, bevorzugt kleiner als 1000 m/min sein. Dabei kann die Bewegung so erfolgen, dass auch der jeweilige abzutragende Werkstoff berücksichtigt werden kann. Hierfür ist das jeweilige Absorptionsvermögen des Werkstoffs für die eingesetzte Laserstrahlung zu beachten.

Bei der Bearbeitung kommt es auch wegen der hohen Vorschubgeschwindigkeiten dazu, dass der Werkstoffabtrag in der Schnittfuge in einem Zug nicht ausreicht, um ein vollständiges Schneiden/Trennen zu erreichen. Dem kann aber mit einem zyklischen durchfahren der jeweiligen Bearbeitungskontur entgegengewirkt werden. So kann beispielsweise für kreisförmige Konturen, der gesamte Umfang mehrfach überfahren werden, so dass gleiche Positionen der Werkstückoberfläche mehrfach dem Einfluss der Laserstrahlung sukzessive ausgesetzt werden können. Ein gepulster Betrieb des eingesetzten Lasers ist, bis auf kritische Bereiche (Ecken, kleine Radien) in denen größere Änderungen der Vorschubachsrichtung durchzuführen sind, nicht erforderlich und ist in vielen Fällen bei der Ausbildung einer Schneidkontur bzw. eines Ausschnitts sogar nachteilig. Ein Ausschalten des Laserstrahls ist lediglich bei einem Wechsel vom Schneiden einer Kontur zu einer nachfolgend auszubildenden Kontur und eine Verringerung der Vorschubgeschwindigkeit ggf. in den genannten kritischen Bereichen erforderlich.

Es ist auch keine zusätzliche der eigentlichen Vorschubbewegung überlagerte oszillierende Bewegung des Laserstrahls unbedingt erforderlich. Diese kann aber unterstützend eingesetzt werden.

Bei der Erfindung wird mit dem Laserstrahl im cw-Mode gearbeitet.

Auf den Einsatz eines Schneidgases in dessen Sinne kann vollständig verzichtet werden. Auftretenden Dämpfen beim Werkstoffabtrag kann durch eine Absaugung ggf. aber auch die Zufuhr einer Gasströmung entgegengewirkt werden, wobei eine Gaszufuhr mit deutlich kleinerem Gasdruck und -volumenstrom möglich ist, als dies für Schneidgas der Fall ist, um den Effekt der Vermeidung von Absorption durch gebildete Gase zu erreichen.

Der Laserstrahl sollte sehr klein fokussiert sein und eine hohe Strahlqualität aufweisen. Der Brennpunktdurchmesser sollte kleiner als 100 µm, bevorzugt bei ca. 25 µm und die Raleighlänge kleiner als 500 µm gehalten sein. Bevorzugt können Faser-, Scheibenoder andere Festkörperlaser bei der Erfindung eingesetzt werden.

Die Erfindung kann besonders vorteilhaft beim "Kiss-Cutting" eingesetzt werden. So können beispielsweise Ausschnitte aus einem die Laserstrahlung absorbierenden Metall, das auf einer Papier- oder Polymerfolienbahn mit einem geeigneten Haftvermittler aufgeklebt ist, mit vorgegebenen Konturen ausgeschnitten und dann die einzelnen Ausschnitte vom den Träger bildenden Papier oder Polymer abgenommen werden. Dabei wird lediglich das Metall geschnitten und dieses dann im Bereich der Schnittfuge verdampft. Der Trägerwerkstoff wird nicht, zumindest aber nahezu Entfernung aber leicht möglich ist.

Mit der Erfindung können sehr schmale Schnittfugen ausgebildet werden, deren Spaltmaß im Bereich der Größe des Brennpunktdurchmessers liegen kann. Die Breite der Schnittfuge wird aber durch die jeweilige Vorschubgeschwindigkeit, bei ansonsten konstant gehaltenen Bearbeitungsparametern beeinflusst.

Von einem Werkstück können mit der Erfindung viele und dabei auch unterschiedlich geometrisch gestaltete einzelne Teile oder Ausschnitte eines auf einem Träger gehaltenen zu schneidenden Werkstoffs oder so gestaltete Werkstücke mit dem Verfahren nach dem Trennen erhalten werden. Auf Änderungen kann flexibel reagiert und es muss dann lediglich das Steuerprogramm angepasst werden. Wegen der schmalen Schnittfugen ist die Werkstoffausnutzung erhöht.

Bei konstanter Leistungsdichte kann in einer Alternative der jeweilige Werkstoffabtrag (abgetragenes Volumen) bereits allein durch eine Änderung der Vorschubgeschwindigkeit erreicht werden. Eine Anpassung an die jeweils zu schneidende Tiefe wird dann durch die Anzahl, mit der die jeweilige Position der Werkstückoberfläche dem Einfluss des Laserstrahls ausgesetzt wird, erreicht. Dabei kann das jeweilige Absorptionsverhalten des abzutragenden Werkstückwerkstoffs mit berücksichtigt werden. So kann bei einer Laserwellenlänge von 1070 nm ein höherer Werkstoffabtrag bei Aluminium, als bei einem Abtrag von Stahl erreicht werden.

Bei der Erfindung ist es auch möglich in einem Arbeitsschritt am Ende der Bearbeitung ggf. gebildeten Grad an Schneidkanten zu entfernen, wobei der Laser-Einfluss des Laserstrahls ausgesetzt wird, erreicht werden. Dabei kann das jeweilige Absorptionsverhalten des abzutragenden Werkstückwerkstoffs mit berücksichtigt werden. So kann bei einer Laserwellenlänge von 1070 nm ein höherer Werkstoffabtrag bei Aluminium, als bei einem Abtrag von Stahl erreicht werden.

Bei der Erfindung ist es auch möglich in einem Arbeitsschritt am Ende der Bearbeitung ggf. gebildeten Grad an Schneidkanten zu entfernen, wobei der Laserstrahl die jeweilige Kontur am Ende der Bearbeitung nochmals abfährt. Hierfür und auch für andere Anwendungen kann eine Profilierung der Laserstrahlintensität so erfolgen, dass im radial äußeren Randbereich des Strahlquerschnitts höhere Intensitäten, als im Inneren vorhanden sind (Top-Head-Profil).

Nachfolgend soll die Erfindung beispielhaft näher erläutert werden.

Zur Ausbildung von 100 kreisförmigen Ausschnitten mit einem Durchmesser von 6,5 mm aus einem planaren ebenen Werkstück aus einem Stahl mit einer Dicke von 0,1 mm wurde ein Festkörperlaser mit einer Ausgangsleistung von 1 kW, der im cw-Mode betrieben werden kann, eingesetzt. Die vom Laser emittierte Laserstrahlung wies eine Wellenlänge von 1070 nm auf. Für die Auslenkung des Laserstrahles wurde ein zweidimensional wirksames 2D-Scansystem, das von der Firma SCANLAB kommerziell erhältlich ist, gearbeitet. Die Brennweite f wurde bei 160 mm gehalten. Dabei wurde ein Querschnitt des Laserstrahls im Brennpunkt von 707 µm², bei einem Radius von 30 µm erreicht und die Leistungsdichte betrug dort 1,56*10⁸ W/cm².

Die Vorschubgeschwindigkeit war bei 800 m/min gehalten, so dass 1,92 s für die Ausbildung von 100 solcher kreisförmigen Ausschnitte erforderlich war. Bei einer Werkstückdicke von 0,05 mm wären hierfür 1,17 s und bei einer Werkstückdicke von 0,2 mm eine Zeit von 2,55 s erforderlich.

An Stelle des rein metallischen Werkstückes kann aber auch ein mit einem Verbund gebildetes Werkstück so bearbeitet werden. Dabei kann ein, wie vorab beschriebenes Werkstück aus dem Stahl mittels eines auf einem Acrylat basierenden Haftvermittler auf einem flexiblen Träger eines Polymers (z.B. PET) stoffschlüssig verbunden worden sein. Der polymere Werkstoff ist dabei für die eingesetzte Wellenlänge der Laserstrahlung transparent.

Nach der Bearbeitung konnte infolge des allein durch Ablation erreichten Werkstoffabtrags die Ausschnitte entfernt werden, so dass diese Ausschnitte als Werkstücke oder Halbzeuge für eine Weiterverarbeitung genutzt werden konnten. Es ist aber auch möglich dann ein Verbundwerkstück, das aus dem dann kreisförmige Durchbrechungen aufweisenden Metall und dem Träger, die weiter stoffschlüssig miteinander verbunden sind, zu erhalten.

## Patentansprüche

1. Verfahren zur trennenden Bearbeitung von Werkstücken mit einem Laserstrahl, bei dem
ein fokussierter Laserstrahl mit einer Leistungsdichte im Brennpunkt von mindestens 1 * 10⁷ W/cm² auf die Oberfläche eines Werkstück zur Ausbildung einer Schnittfuge gerichtet wird, und **dadurch gekennzeichnet, dass** der Laserstrahl mit einer das Absorptionsvermögen des abzutragenden Werkstoffs berücksichtigenden Vorschubgeschwindigkeit von mindestens 150 m/min bis maximal 1200 m/min auf die Oberfläche des Werkstücks gerichtet, im cw-Mode betrieben und der Werkstoffabtrag ausschließlich durch Ablation erreicht wird; wobei
die Breite der Schnittfuge durch die jeweilige Vorschubgeschwindigkeit, bei ansonsten konstant gehaltenen Bearbeitungsparametern beeinflusst oder
der jeweilige Werkstoffabtrag allein durch die Änderung der Vorschubgeschwindigkeit erreicht wird und die Anpassung an die zu schneidende Tiefe durch die Anzahl, mit der eine jeweilige Position der Werkstückoberfläche ausgesetzt wird, erreicht wird.

2. Verfahren nach Anspruch 1, **dadurch gekennzeichnet, dass** der Laserstrahl so fokussiert wird, dass der Brennpunkt einen Durchmesser kleiner 100 *µ*m aufweist.

3. Verfahren nach einem der vorhergehenden Ansprüche, **dadurch gekennzeichnet, dass** ein aus mindestens zwei flächig miteinander verbundenen Werkstoffen gebildetes Werkstück bearbeitet und dabei lediglich ein Werkstoffabtrag am an der Werkstückoberfläche vorhandenen Werkstoff durchgeführt wird.

4. Verfahren nach Anspruch 3, **dadurch gekennzeichnet, dass** beim Trennen Ausschnitte ausgebildet und die Ausschnitte vom bearbeiteten Werkstück entfernt werden.

5. Verfahren nach Anspruch 3 oder 4, **dadurch gekennzeichnet, dass** die Bearbeitung an einem Werkstück, bei dem die mindestens zwei ein Werkstück bildenden Werkstoffe stoffschlüssig miteinander verbunden sind, durchgeführt wird.

6. Verfahren nach einem der Ansprüche 3 bis 5, **dadurch gekennzeichnet, dass** eine Bearbeitung an einem Werkstück, das mit einem die jeweilige Laserstrahlung absorbierenden Werkstoff und einem die Laserstrahlung nicht absorbierenden Werkstoff so durchgeführt wird, dass lediglich der die Laserstrahlung absorbierende Werkstoff im Bereich auszubildender Schnittfugen abgetragen wird.

7. Verfahren nach einem der vorhergehenden Ansprüche, **dadurch gekennzeichnet, dass** eine Vorschubgeschwindigkeit von mindestens 700 m/min eingehalten wird.

8. Verfahren nach einem der vorhergehenden Ansprüche, **dadurch gekennzeichnet, dass** eine Profilierung im Laserstrahlquerschnitt mit höheren Intensitäten im äußeren Randbereich, als in seinem Inneren eingestellt wird.

## Claims

1. A method for the cutting machining of workpieces using a laser beam, wherein
a focused laser beam having a power density in the focal point of at least 1 * 10⁷ W/cm² is directed onto the surface of a workpiece for the formation of a kerf and **characterized in that** the laser beam is directed onto the surface of the workpiece with a feed speed taking account of the absorption capability of the material to be removed of at least 150 m/min up to a maximum of 1200 m/min, is operated in the cw mode and the material removal is achieved exclusively by ablation; wherein
the width of the kerf is influenced by the respective feed speed with otherwise constantly held machining parameters or
the respective material removal is achieved exclusively by changing the feed speed and the adjustment of the depth to be cut is achieved by the number of times of exposure of a respective position of the workpiece surface.

2. A method in accordance with claim 1, **characterized in that** the laser beam is focused so that the focal point has a diameter less than 100 µm.

3. A method in accordance with one of the preceding claims, **characterized in that** a workpiece formed from at least two materials areally connected to one another is machined and in this respect only a material removal at the material present at the workpiece surface is carried out.

4. A method in accordance with claim 3, **characterized in that** sections are formed on the cutting and the sections are removed from the machined workpiece.

5. A method in accordance with either of claims 3 or 4, **characterized in that** the machining is carried out at a workpiece in which the at least two materials forming a workpiece are connected to one another with material continuity.

6. A method in accordance with one of the claims 3 to 5, **characterized in that** a machining is carried out at a workpiece which has a material absorbing the respective laser radiation and a material not absorbing the laser radiation so that only the material absorbing the laser radiation is removed in the region of kerfs to be formed.

7. A method in accordance with one of the preceding claims, **characterized in that** a feed speed of at least 700 m/min is observed.

8. A method in accordance with one of the preceding claims, **characterized in that** a profiling is set in the laser beam cross-section with higher intensities in the outer marginal region than in its interior.

## Revendications

1. Procédé d'usinage de séparation de pièces avec un rayon laser, dans lequel un rayon laser focalisé avec une densité de puissance au foyer d'au moins 1*10⁷ W/cm² est appliqué sur la surface d'une pièce pour la formation d'une saignée de coupe, et **caractérisé en ce que** le rayon laser est appliqué avec une vitesse d'avance, dépendant du matériau à enlever, d'au moins 150 m/min jusqu'à 1200 m/min sur la surface de la pièce, exploité en mode cw et l'enlèvement de matériau est obtenu exclusivement par ablation ;
la largeur de la saignée de coupe étant influencée par la vitesse d'avance, avec des paramètres d'usinage maintenus constants ou
l'enlèvement de matériau étant obtenu uniquement par la modification de la vitesse d'avance et l'adaptation à la profondeur à découper par le nombre avec lequel une position correspondante de la surface de la pièce est exposée.

2. Procédé selon la revendication 1, **caractérisé en ce que** le rayon laser est focalisé de façon à ce que le foyer présente un diamètre inférieur à 100 µm.

3. Procédé selon l'une des revendications précédentes, **caractérisé en ce qu'**une pièce constituée d'au moins deux matériaux reliés entre eux est usinée et un enlèvement de matériau est effectué uniquement sur le matériau se trouvant à la surface de la pièce.

4. Procédé selon la revendication 3, **caractérisé en ce que**, lors de la séparation, des découpes sont réalisées et les découpes sont retirées de la pièce à usiner.

5. Procédé selon la revendication 3 ou 4, **caractérisé en ce que** l'usinage est effectué sur une pièce, dans laquelle les au moins deux matériaux formant une pièce sont reliés entre eux par liaison de matière.

6. Procédé selon l'une des revendications 3 à 5, **caractérisé en ce qu'**un usinage est effectué sur une pièce constituée d'un matériau absorbant le rayon laser et d'un matériau n'absorbant pas le rayon laser, de façon à ce que seul le matériau absorbant le rayon laser soit enlevé au niveau des saignées de coupe à réaliser.

7. Procédé selon l'une des revendications précédentes, **caractérisé en ce qu'**une vitesse d'avance d'au moins 700 m/min est respectée.

8. Procédé selon l'une des revendications précédentes, **caractérisé en ce qu'**un profilage est réglé dans la section transversale du laser avec des intensités plus élevées au niveau du bord externe qu'au niveau de l'intérieur.
